# EUROPEAN PATENT SPECIFICATION

(11) **EP 0 497 064 B1**
(45) Date of publication and mention of the grant of the patent: **30.08.1995**
(21) Application number: 91400250.6
(22) Date of filing: 01.02.1991
(51) Int. Cl.: B23K 1/00

(54) **Method for making double-walled insulating metal container**
Verfahren zur Herstellung doppelwandiger isolierender metallischer Behälter
Méthode de fabrication de récipient métallique isolant à double paroi

(43) Date of publication of application: 05.08.1992
(73) Proprietor: NIPPON SANSO CORPORATION, Minato-ku, Tokyo (JP)
(72) Inventor: Toida, Shouji, c/o Nippon Sanso Corporation, Tokyo (JP); Tsuchiya, Shigeru, c/o Nippon Sanso Corporation, Tokyo (JP); Ariga, Keiki, c/o Nippon Sanso Corporation, Tokyo (JP); Itoh, Seiichi, c/o Nippon Sanso Corporation, Tokyo (JP); Ohta, Hidetoshi, c/o Nippon Sanso Corporation, Tokyo (JP)
(74) Representative: Dubois-Chabert, Guy

(56) References cited:
- DE-A- 3 216 934
- GB-A- 2 067 449
- PATENT ABSTRACTS OF JAPAN vol. 8, no. 160 (M-312)(1597) July 25, 1984 & JP-A-59 56 970 (TAIYOU SANSO K.K. ) April 2, 1984

## Description

### Field of the Invention

This invention relates to a method of manufacturing a double-walled, thermally insulating metal container by processing in a vacuum heat treating furnace.

### Background of the Invention

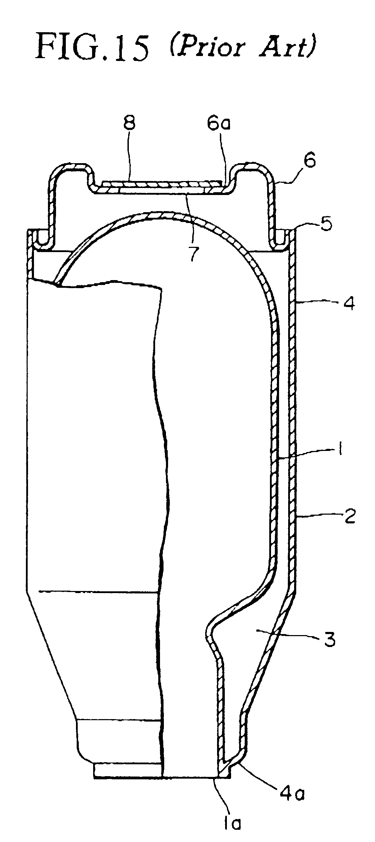

Thermally insulated metal containers, commonly known as thermos or vacuum bottles, are constructed of an inner and an outer metal casings to create a double-walled space therebetween and evacuating the space to create a thermal insulation barrier. A method for making such thermos bottles has been disclosed in a Japanese patent, JPN 60-36766 (Kokoku). According to this patented method, a thermos bottle shown in Figure 15 consists of an inner casing (1) and an outer casing (2) having a bottom, to create a space 3 therebetween to be evacuated for thermal insulation. A thermos bottle can be made from such a structure by joining a reduced diameter section (4a), of the body section (4) of the outer casing (2), to the mouth section (1a) of the inner casing (1). To the bottom opening (5) (shown at the top in Figure 15) is attached a bottom section (6) to complete the construction of a container assembly of the thermos bottle. There is a stepped section (6a) in the center area of the bottom section (6), and there is an evacuation opening (7) in the central region of the stepped section (6a). This opening (7) is brazed shut with a sealing plate (8) after evacuation of the space 3 to seal in the vacuum.

This vacuum sealing operation is performed by inverting the bottle as shown in Figure 15, placing pieces of brazing alloy suitably around the stepped section (6a), supporting the sealing plate (8) to provide a space between it and the stepped section (6a), evacuating followed by heating so as to evacuate space 3 and melt the brazing alloy to allow the sealing plate (8) to drop under its own weight to braze shut the evacuation opening (7).

This method of joining was susceptible to sealing defects produced by dislocation of brazing alloy and the sealing plate (8) prior to brazing due to rushing air streams at the evacuation opening (7) through said space (between it and the stepped section (6a)) as well as by the uncontrolled flowing of the brazing alloy around the peripheries of the stepped section (6a) during brazing.

In addition, it was difficult to automate the placement of the brazing alloy properly, necessitating a manual operation. Furthermore, the sealing plate was necessary only to provide sealing of the evacuation opening (7). These were two of the main reasons for increasing the cost of production of metal thermos bottles.

The invented method was developed to solve the above mentioned problems, to provide improved sealing without the use of the sealing plate, to provide a low cost production method and to devise a method suitable for automated production of metal thermal insulation containers.

The inventors have already presented a Patent Application No. 1-106925 in which a new method is described for making a metal thermos bottle. This process is described briefly below. An inner casing 1 and an outer casing 3 having an opening are joined together at their mouth section to provide a thermos assembly. Brazing material is placed on top of the evacuation opening so as to partially cover the opening, and the assembly is heated in a vacuum heating furnace. The assembly is placed inside the furnace so that the opening faces upward, and the molten brazing material flows into the opening to cover and seal the opening upon solidification to provide a vacuum seal. The feature of this invention is that it does not use a sealing plate. By not requiring the sealing plate, it becomes possible to simplify the production process, resulting in lowering of the production cost.

### Summary of the Present Invention

The present invention concerns a method for making a double-walled insulating metal container comprizing the steps of :
- preparing an inner casing having a mouth portion ;
- preparing an outer casing having a mouth portion and a bottom section ;
- providing an evacuation opening in the bottom section of the outer casing ;
- joining the mouth portions of each casing to each other, and joining the bottom section to the outer casing, thereby forming a double-walled container assembly and defining an insulating space enclosed by the inner casing and the outer casing ;
- covering entirely the evacuation opening with a brazing material ;
- placing the double-walled container assembly in a vacuum heating device ;
- heating the double-walled container assembly in order to melt the brazing material ;
- lowering the temperature in the vacuum heating device so as to seal solidify the brazing material and the evacuation opening ;
   characterized in that the brazing material comprising a binder and a brazing metal, the double-walled container assembly is at first heated to a temperature range higher than the vaporizing temperature of the binder but less than the melting point of the brazing metal and then, after finishing the evacuation of the insulating space, the temperature in the vacuum heating device is raised higher than the melting point of the brazing metal.

The function of the compounded brazing material is as follows. When a temperature is reached at which the binder evaporates, a porous braze body is left behind through which evacuation of the space continues to take place. After the evacuation of the space has been completed, the temperature is adjusted to first melt and then to solidify the brazing metal in situ to seal off the opening.

Further, the method of Claim 2 relates to the method as claimed in Claim 1, in which a depression is created on the outer casing, and an evacuation opening is provided in this depression.

According to this method, the molten brazing material can flow into the opening readily because the opening is provided at the bottom area of a depression.

### Brief Description of the Drawings

Figure 1 is a schematic draining to show the structural features of the metal thermos bottle in a first preferred embodiment of Claim 1.

Figure 2 shows an enlarged view of the depression and the evacuation opening shown in Figure 1.

Figure 3 Shows an enlarged view of the sealed evacuation opening.

Figure 4 is a schematic drawing to show the structural features of the metal thermos bottle in a second preferred embodiment.

Figures 5 and 6 are enlarged views of the compounded brazing material placed on the depressed section and the evacuation opening shown in Figure 4.

Figure 7 is an enlarged view of the sealed evacuation opening shown in Figure 4.

Figure 8 is a schematic drawing to show the structural features of the metal thermos bottle in a third preferred embodiment.

Figure 9 is an enlarged view of the compounded material placed on the depressed section and the evacuation opening shown in Figure 8.

Figure 10 is a schematic drawing to show the structural features of the metal thermos bottle in a fourth preferred embodiment.

Figure 11 is a schematic drawing to show the structural features of the metal thermos bottle in a fifth preferred embodiment.

Figures 12 and 13 show enlarged views of the compounded brazing material placed on the depressed section and the evacuation opening shown in Figure 11.

Figure 14 is a schematic drawing to show the structural features of the metal thermos battle in a sixth preferred embodiment.

Figure 15 is a schematic drawing to show the structural features of a conventional metal thermos bottle.

### Detailed Description of the Preferred Embodiments of the Present Invention

The present invention is explained in reference to the preferred embodiments shown in respective drawings.

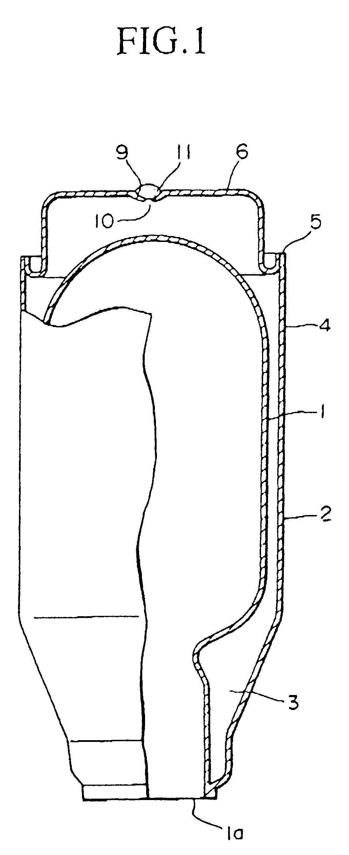

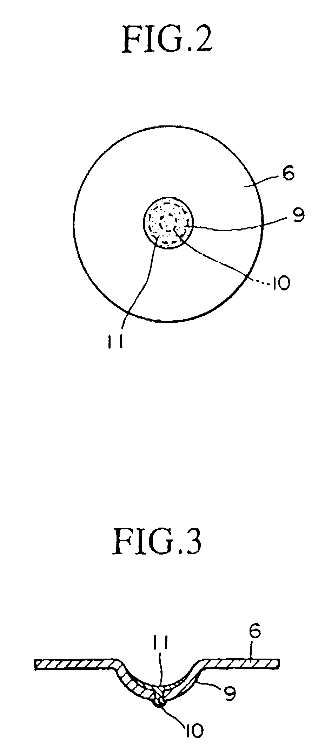

Figures 1 and 2 show manufacturing of metal thermos bottles, before sealing, according to a first preferred embodiment, and Figure 2 shows an enlarged view of the placement of the a compounded brazing material (11) on the evacuation opening (10). The key difference between the prior art Figure 15 and the present invention shown in Figure 1 is the method of sealing of the evacuation opening (10) without the use of the sealing plate (8) (prior art). In the present invention, the evacuation opening (10) is sealed with a compounded brazing material (11) placed on the opening which is fabricated in the center of a depressed section (9) which is disposed centrally on a bottom section (6).

According to the first preferred embodiment, the first step is to prepare a thermos bottle assembly, shown inverted in Figure 1, which has a semi-spherical depressed section (9), depressed in the direction of the space (3), in the central area of the bottom section (6), as shown in this figure, and to fabricate the evacuation opening (10) in the central area of the depressed section (9), as shown in Figure 2. The next step is to place a quantity of a compounded brazing material (11) to cover the opening (10) located at the top of the inverted thermos assembly. The assembly is placed in the inverted position in a vacuum heating furnace (not shown).

The detailed processing steps consists basically of a two stage process of: evacuating and heating the assembly to a temperature to vaporize the binder (300 to 600 °C) but not to melt the brazing metal; and melting the brazing metal to seal the opening at a temperature beyond the melting temperature of the brazing metal (1000 °C).

During the first stage of evacuating and heating between 300 to 600 °C, the binder in the compounded brasing material (11) is evaporated to leave behind a porous brasing body through which evacuation of the space 3 can be continued.

After thoroughly evacuating the space 3 under the above-described condition, tile heating is resumed until the compounded brazing material (11) is melted. At this stage of processing, the molten braze is held in the opening by its liquid surface tension forces and penetrates into the opening (10) by the capillary action to seal off the opening (10) completely. Since the melting is carried out in a vacuum, degassing tan take place to form a brazed joint of improved structural integrity.

If the size of the opening (10) is too small, the evacuation time becomes too long while if it is too large, the surface tension force of the liquid braze is insufficient to hold the liquid paste on the top surface of the opening; therefore, an optimum opening size is between 0.1 to 2.0 mm.

As for the compounded brazing material (11), those which are not volatile at the brazing temperatures, such as Ni-, Ag-, Cu-, Au-, Al-, Ti- , Sn- and P-based materials con be used. A variation of a compounded brazing material (11) is to prepare a composite compounded brazing material, in which powder or flake material having a higher melting point than the brazing metal, such as stainless and carbon steels, are added to the binder in addition to the brazing metal. Such a composite brazing material (11) is economical, since a small quantity is sufficient to seal the opening, and further, the composite brazing material is able to remain on openings of large dimensions without dropping through, thus permitting the use of a large evacuation opening, facilitating evacuation, and ultimately leading to lower production cost.

The binder material is not particularly limited so long as it is an organic-based material which can melt below the melting point of the brazing metal, preferably in a range of 300 to 600 °C. For example, starch treated with an acid or with an alkaline substance, and an emulsion of styrene/vinyl copolymer are all potential binder materials.

By following the steps as described above, it is possible to evacuate and seal the thermal insulation space 3 of the metal thermos bottle. Additionally, by placing a getter material (to capture intruding gaseous substances) in this space 3, it is possible to maintain original vacuum for a prolonged period of time, and to retain the original insulative qualities.

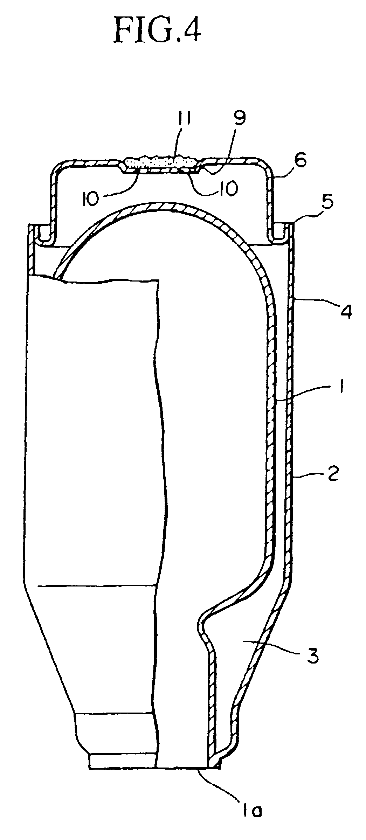

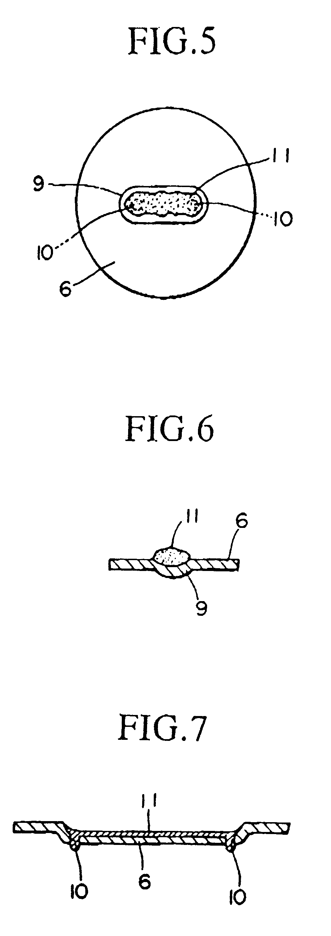

Figures 4 to 6 show various cases, before sealing, of the second preferred embodiment of this invention. Figures 5 and 6 show enlarged views of the brazing material (11) and the evacuation opening (10), and Figure 7 shows the sealed opening.

The second preferred embodiment differs from the first preferred embodiment shown in Figure 1 in the number of evacuation openings (10) disposed in the depressed section (9). This case shows, as in Figures 4 to 6, two openings (10) located at the bottom ends of a channel-shaped depression (9) disposed in a central area of the bottom section (6). By providing a multiple of such evacuation openings, it becomes possible to speed up evacuation of the space 3, without enlarging the size of each opening.

It should be obvious that the number of such openings (10) are not restricted to two as in this example, but any number of openings con be provided lengthwise along the channel (9).

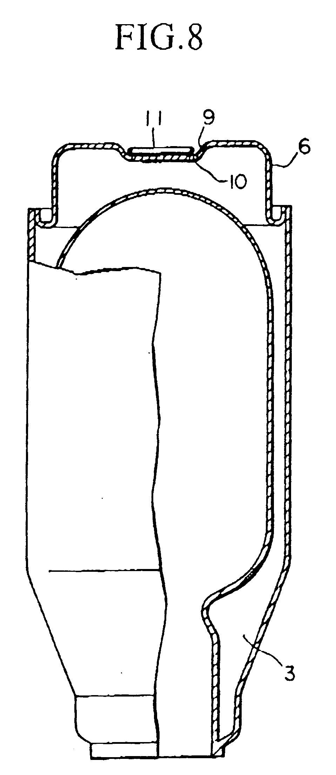

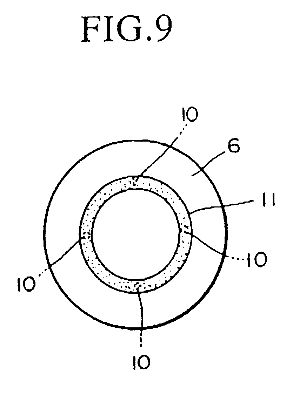

Figures 8 and 9 show various cases, before sealing, of the third preferred embodiment of this invention.

The third preferred embodiment differs from the foregoing preferred embodiments in the size of the depression (9), which is larger than that shown in the first preferred embodiment, disposed in the central area of the bottom section (6). Within this circular-shaped depression is a series of evacuation openings (10) in a concentric circle, along which is placed a line of brazing material (11) to cover the openings (10). According to this arrangement, it is possible to speed up evacuation of the apace 3, and the amount of brazing material (11) can also be reduced.

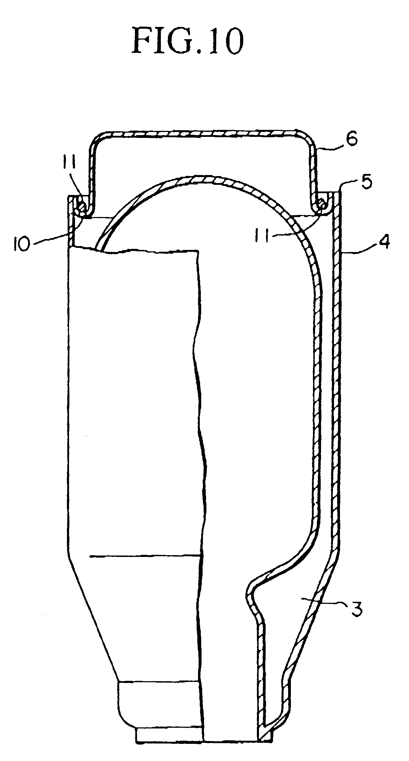

Figure 10 shows the fourth preferred embodiment, before sealing, of this invention. In this case, a series of evacuation openings (10) is provided in the bottom area of a circular depression (9) disposed in the joint area between the bottom opening (5) and the bottom section (6), and a line of brazing material (11) was placed along the depression to cover the openings (10).

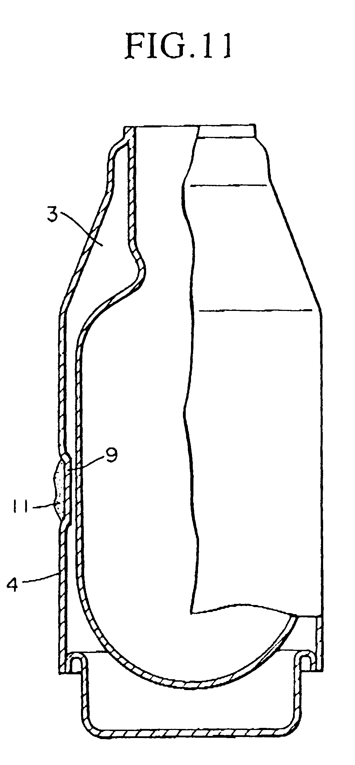

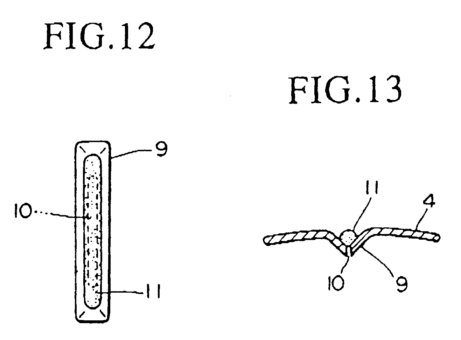

Figures 11 to 13 show the fifth preferred embodiment, before sealing, of this invention. Figure 11 shows the general structural features of the thermos assembly, before sealing, and Figures 12 and 13 show enlarged views of the brazed opening. This preferred embodiment differs from the preferred embodiments shown previously in the placement of the brazing material (11) on the assembly. An evacuation opening (10) is provided on the bottom of a V-shaped depression (9) (depression in the direction of the space 3) disposed on the body section (4) of the outer casing (2). Brazing is carried out with the thermos assembly in a horizontal position. The length of the opening is not restricted to any extent, but a preferable width of the opening is in a range of 0.1 to 2.0 mm, as in the case of circular openings.

In this particular example, the evacuation opening (10) was provided on the central area of the body section (4), but if it is provided on the upper area of the shoulder section of the outer casing (2) , there would be no need to invert or lay the assembly on its side during vacuum brazing.

The first to the fifth preferred embodiments presented a case of the evacuation opening (10) located on the bottom area of a depression (9), but the usefulness of this invention is not limited to this case. It is permissible to provide the opening (10) on the side walls of the depression (9).

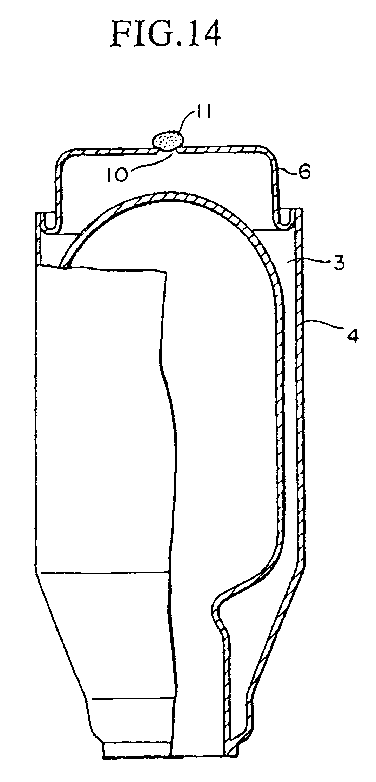

Figure 14 shows the sixth preferred embodiment, before sealing, of this invention. This preferred embodiment differs from the first preferred embodiment which was shown in Figures 1 to 3 in having the evacuation opening (10) directly on the bottom section (6) without the depression (9). By eliminating the need for a depression, the manufacturing process can be further simplified.

According to the method presented above, an evacuated metal thermos bottle can be produced by the following steps. A thermos bottle assembly having on inner and an outer casings, constituting a double-wall structure, can be prepared wherein the outer casing (2) has an evacuation opening (10) for evacuating the space between the casings. A compounded brazing material (11), consisting essentially of a binder and brazing metal powders or particulate materials, is placed to cover the opening. The assembly is then placed in a vacuum heating furnace to vaporize the binder, and the evacuation is continued to further evacuate the space in between the casings. When the space is evacuated, the thermos assembly is heated to higher temperatures to melt the brazing metal to seal off the evacuation opening (10). This method avoids the use the sealing plate, end permits efficient production of high quality thermos bottles.

According to the invented method, because the placement of the brazing material (11) has been simplified, it is possible to automate the manufacturing process.

Further, according to the invented method, lesser amount (0.2 to 1.0 g) of the brazing metal is needed to obtain good sealing because the conventional process required a large sealing plate and a larger quantity (2 to 3 g) of the brazing metal was needed seal a large contact area. Accordingly, the production cost can be lowered.

The present method differs from the method disclosed in the Patent Application No. 1-106925 as summarized in the following.

The patented method involves placing of the brazing metal partially over the evacuation opening (10). The present invention is characterized by the use of a special compounded brazing material (11), which consists of a binder and brazing metal powder or particulate, to cover the evacuation opening (10) completely; and in the sequenced vacuum brazing temperatures. That is, evacuation of thermos assembly can be carried out in spite of complete covering of the evacuation opening (10) with the brazing material (11). This has been made possible by the action of the compounded brazing material (11) disclosed in the present invention, which compounded brazing material (11) consists of a vaporizable binder and brazing metal powder or particulates. When the temperature is maintained above the vaporizing temperature of the binder but below that of the melting point of the brazing, the binder vaporizes leaving behind a porous brazing body, through which evacuation can take place in spite of covering the entire opening with the brazing material (11). When the evacuation process is completed, the temperature of the vacuum heating furnace is raised to melt the porous braze to seal off the opening. Therefore, the processes claimed in the present invention is able to produce a high degree of vacuum in the thermal insulation space which results in high quality thermos bottles which can hold the content temperature, and because the present invention allows a more efficient use of the metallic brazing material (11) as compared with the method of Japanese Patent Application No. 1-106925, it provides a cost efficient production process for producing high quality metal thermos bottles.

## Claims

1. Method for making a double-walled insulating metal container comprising the steps of :
- preparing an inner casing (1) having a mouth portion (1a) ;
- preparing an outer casing (2) having a mouth portion and a bottom section (6) ;
- providing an evacuation opening (10) in the bottom section (6) of the outer casing (2) ;
- joining the mouth portions (1a) of each casing to each other, and joining the bottom section (6) to the outer casing (2), thereby forming a double-walled container assembly and defining an insulating space (3) enclosed by the inner casing and the outer casing (2) ;
- covering entirely the evacuation opening (10) with a brazing material (11) ;
- placing the double-walled container assembly in a vacuum heating device ;
- heating the double-walled container assembly in order to melt the brazing material ;
- lowering the temperature in the vacuum heating device so as to solidify the brazing material and seal the evacuation opening (10);
characterized in that the brazing material comprising a binder and a brazing metal, the double-walled container assembly is at first heated to a temperature range higher than the vaporizing temperature of the binder but less than the melting point of the brazing metal and then, after finishing the evacuation of the insulating space (3), the temperature in the vacuum heating device is raised higher than the melting point of the brazing metal.

2. Method according to claim 1, wherein the evacuation opening (10) is disposed within a depressed section (9) of the bottom section (6).

3. Method according to claim 1 or 2, wherein said temperature range higher than the vaporizing temperature of the binder but less than the melting point of the brazing metal is 300-600°C, the temperature higher than the melting point of the brazing metal being 1000°C.

## Patentansprüche

1. Verfahren zum Herstellen eines doppelwandigen isolierenden Metallbehälters, das die folgenden Schritte umfaßt:
- Herstellen eines inneren Gehäuses (1) mit einem Öffnungsteil (1a);
- Herstellen eines äußeren Gehäuses (2) mit einem Öffnungsteil und einem Bodenabschnitt (6);
- Herstellen einer Auspumpöffnung (10) im Bodenabschnitt (6) des äußeren Gehäuses (2);
- Verbinden der Öffnungsteile (1a) jedes Gehäuses miteinander und Verbinden des Bodenabschnitts (6) mit dem äußeren Gehäuse (2), wodurch eine doppelwandige Behälterbaugruppe entsteht und ein isolierender Raum (3) gebildet wird, der von dem inneren Gehäuse und dem äußeren Gehäuse (2) umschlossen ist;
- vollständiges Umhüllen der Auspumpöffnung (10) mit einem Hartlötmaterial (11);
- Einbringen der doppelwandigen Behälterbaugruppe in eine Vakuum-Heizvorrichtung;
- Erhitzen der doppelwandigen Behälterbaugruppe, um das Hartlötmaterial zu schmelzen;
- Absenken der Temperatur in der Vakuum-Heizvorrichtung, um so das Hartlötmaterial zu verfestigen und die Auspumpöffnung (10) zu verschließen;
**dadurch gekennzeichnet**, daß das Hartlötmaterial ein Bindemittel und ein Hartlötmetall umfaßt, die doppelwandige Behälterbaugruppe zunächst auf einen Temperaturbereich über der Verdampfungstemperatur des Bindemittels, jedoch unter dem Schmelzpunkt des Hartlötmetalls erhitzt wird, und anschließend, nach Beendigung des Auspumpens des isolierenden Raumes (3), die Temperatur in der Vakuum-Heizvorrichtung über den Schmelzpunkt des Hartlötmetalls erhöht wird.

2. Verfahren nach Anspruch 1, wobei die Auspumpoffnung (10) in einem vertieften Abschnitt (9) des Bodenabschnitts (6) angeordnet ist.

3. Verfahren nach Anspruch 1 oder 2, wobei der Temperaturbereich über der Verdampfungstemperatur des Bindemittels, jedoch unter dem Schmelzpunkt des Hartlötmetalls, 300-600°C beträgt, die Temperatur über dem Schmelzpunkt des Hartlötmetalls 1000°C beträgt.

## Revendications

1. Procédé de fabrication d'un récipient métallique isolant à double paroi, comprenant les étapes consistant à :
- préparer une enveloppe intérieure (1) ayant une partie ouverture (1a) ;
- préparer une enveloppe extérieure (2) ayant une partie ouverture et une partie fond (6) ;
- pratiquer une ouverture d'évacuation (10) dans la partie fond (6) de l'enveloppe extérieure (2) ;
- assembler l'une à l'autre les parties ouvertures (1a) de chaque enveloppe et assembler la partie fond (6) à l'enveloppe extérieure (2) pour ainsi former un ensemble récipient à double paroi et définir un espace isolant (3) compris entre l'enveloppe intérieure et l'enveloppe extérieure (2) ;
- recouvrir en totalité l'ouverture d'évacuation (10) par un produit de brasage (11) ;
- mettre l'ensemble du récipient à double paroi pour un dispositif de chauffage à vide ;
- chauffer l'ensemble du récipient à double paroi pour faire fondre le produit de brasage ;
- abaisser la température dans le dispositif de chauffage à vide de manière à solidifier le produit de brasage et à obturer hermétiquement l'ouverture d'évacuation (10) ;
caractérisé en ce que le produit de brasage comprenant un liant et un métal de brasage, l'ensemble du récipient à double paroi est tout d'abord chauffé jusqu'à une plage de températures, supérieure à la température de vaporisation du liant mais inférieure au point de fusion du métal de brasage et ensuite, lorsque le vide est fait dans l'espace isolant (3), la température à l'intérieur du dispositif de chauffage à vide est augmentée jusqu'à une valeur supérieure au point de fusion du métal de brasage.

2. Procédé selon la revendication 1, dans lequel l'ouverture d'évacuation (10) est disposée à l'intérieur d'une partie en renfoncement (9) de la partie fond (6).

3. Procédé selon la revendication 1 ou 2, dans lequel ladite plage de températures, supérieure à la température de vaporisation du liant mais inférieure au point de fusion du métal de brasage, va de 300 à 600 °C, la température supérieure au point de fusion du métal de brasage étant de 1.000 °C.
